# EUROPEAN PATENT SPECIFICATION

(11) **EP 3 859 281 B1**
(45) Date of publication and mention of the grant of the patent: **26.07.2023**
(21) Application number: 21152935.9
(22) Date of filing: 22.01.2021
(51) Int. Cl.: G01C 21/36, G01C 21/00

(54) **APPARATUS AND METHOD FOR COLLECTING DATA FOR MAP GENERATION**
VORRICHTUNG UND VERFAHREN ZUM SAMMELN VON DATEN ZUR KARTENERZEUGUNG
APPAREIL ET PROCÉDÉ DE COLLECTE DE DONNÉES POUR LA GÉNÉRATION DE CARTE

(30) Priority: 29.01.2020 JP 2020012845
(43) Date of publication of application: 04.08.2021
(73) Proprietor: TOYOTA JIDOSHA KABUSHIKI KAISHA, Toyota-shi, Aichi-ken 471-8571 (JP)
(72) Inventor: NEYAMA, Ryo, Toyota-shi, Aichi-ken 471-8571 (JP); TANAKA, Masahiro, Tokyo 103-0022 (JP); KOREISHI, Jun, Tokyo 103-0022 (JP)
(74) Representative: J A Kemp LLP

(56) References cited:
- WO-A1-2019/195404
- US-A1- 2017 307 398

## Description

### FIELD

The present invention relates to an apparatus and a method for collecting data to be used for generating or updating a map.

### BACKGROUND

Highly accurate road maps to which an automated vehicle-driving system refers for automated driving control of a vehicle are required to accurately represent road information. To generate such accurate road maps, techniques have been proposed to appropriately collect information indicating, for example, the shapes of roads, features on roads (e.g., road markings drawn thereon), and signposts at every place in target regions for map generation (e.g., see Japanese Unexamined Patent Publications Nos. 2007-3568 and 2014-215205).

For example, Japanese Unexamined Patent Publication No. 2007-3568 discloses a technique that detects a road symbol for a stop from an image of a road surface captured by a camera mounted on a vehicle and stores road map information represented by the detected road symbol in a road-map storage device together with location information of the vehicle. Japanese Unexamined Patent Publication No. 2014-215205 discloses a technique of a navigation device. This navigation device determines whether there is a difference between feature information that is included in map data and corresponds to a feature located on a movement path and feature information actually acquired during movement, and, if any, transmits the determination result and the feature information used in the determination to a server device. The navigation device updates the map data using update data only when the update data is transmitted thereto.
US2017/307398 A1 discloses a surrounding information collection system which requests a vehicle to transmit surrounding information.
WO2019/195404 A1 discloses a method including causing collection of navigational information associated with an environment traversed by a host vehicle; storing the collected navigational information; determining, based on an output of at least one navigational sensor, a location of the host vehicle; transmitting the determined location of the host vehicle to a server; receiving, from the server and in response to the transmitted determined location, a request for transmission of a selected subset of the navigational information collected by the host vehicle; and transmitting the selected subset of the navigational information to the server.

### SUMMARY

In the above techniques, a processor mounted on a vehicle performs an operation to detect a feature from an image and a process depending on the result of the operation. However, the vehicle-mounted processor may fail to detect or erroneously detect a road feature of a complex shape or a road structure, such as a complex intersection, from an image showing such a feature or structure, failing to appropriately collect data for map generation.

It is an object of the present invention to provide an apparatus that can collect data suitable for map generation.

According to an aspect of the invention, an apparatus for collecting data for map generation is provided, as defined in claim 1. The apparatus includes a communication unit capable of communicating with a vehicle, and a storing unit that stores type information for designating which type of collection target data is to be collected for each of road sections. The collection target data represents a feature in the road section, the feature represented on a map to be generated or updated. The apparatus also includes a notifying unit that notifies the vehicle of the type information with the communication unit, and an updating unit that updates the type information for each of the road sections, in the case that collection of the collection target data of the type designated for the road section has been completed, so as to stop collection of the collection target data in the road section.

In the apparatus, the vehicle includes an imaging unit mounted thereon, the imaging unit being configured to take a picture of surroundings of the vehicle to generate an image representing the surroundings including the feature. The type of the collection target data for each of the road sections is at least one of a first type that is information for identifying the feature represented in the image, a second type including a sub-image of the image, and a third type including all the image.

The storing unit further stores a date and time of notification of the type information to the vehicle. The notifying unit notifies the vehicle of the type information again only after a predetermined period has elapsed since the date and time of the last notification of the type information to the vehicle.

For each of the road sections, the type information preferably further includes information indicating whether the collection target data is being collected. The notifying unit preferably notifies the vehicle of the type information when a planned travel route of the vehicle received from the vehicle with the communication unit at least overlaps one of the road sections in which the collection target data is being collected.

According to another embodiment of the present invention, a method for collecting data for map generation is provided, as defined in claim 3. The method includes the step of notifying, with a communication unit, a vehicle of type information for designating which type of collection target data is to be collected for each of road sections. The collection target data represents a feature in the road section on a map to be generated or updated. The method also includes the step of updating the type information for each of the road sections, in the case that collection of the collection target data of the type designated for the road section has been completed, so as to stop collection of the collection target data in the road section. The method also includes a step of storing a date and time of notification of the type information to the vehicle, and notifying the vehicle of the type information again only after a predetermined period has elapsed since the date and time of the last notification of the type information to the vehicle.

The apparatus according to the present invention has an advantageous effect that can collect data suitable for map generation.

### BRIEF DESCRIPTION OF DRAWINGS

Figure 1 schematically illustrates the configuration of a system for collecting data for map generation that includes an apparatus for collecting data for map generation.
Figure 2 illustrates the hardware configuration of a server, which is an embodiment of the data collecting apparatus.
Figure 3 is a diagram for briefly describing type information.
Figure 4 is a functional block diagram of a processor of the server, related to a process for collecting data for map generation.
Figure 5 is an operation flowchart of a notification process in the data collecting process.
Figure 6 is an operation flowchart of a process for updating the type information in the data collecting process.
Figure 7 schematically illustrates the configuration of a vehicle.
Figure 8 illustrates the hardware configuration of a data acquiring apparatus.
Figure 9 is a functional block diagram of a processor of the data acquiring apparatus.

### DESCRIPTION OF EMBODIMENTS

Hereinafter, an apparatus for collecting data for map generation and a method therefor performed by the apparatus will be described with reference to the accompanying drawings. For each of road sections included in a target region for map generation, the apparatus, which is referred to as the "data collecting apparatus" below, stores type information that designates the type of data to be collected for the road section and indicates whether the data is being collected. This data, which is referred to as "collection target data" or "data for map generation" below, represents a feature on a map or a road map to be generated or updated. The feature on a map to be generated is, for example, the road itself, a road marking, or a signpost. For each of the road sections, the data collecting apparatus further stores the number of pieces of collected collection target data of the type designated for the road section. This number is referred to as the "number of counts" below. When receiving, from a vehicle, location information indicating the location of a feature represented by the collection target data as well as the collection target data of the type designated for the road section including the location indicated by the location information, the data collecting apparatus updates the number of counts for the road section. In the case that the collection of the collection target data of the type designated for the road section has been completed, the data collecting apparatus further updates the type information so as to stop collection of the collection target data in the road section. In this way, since it allows for designating, for each road section, the type of data that seems to be necessary for generating or updating a road map, the data collecting apparatus can collect data that is suitable to be used for generating or updating the road map and prevent the communication load between the vehicle and the apparatus from increasing.

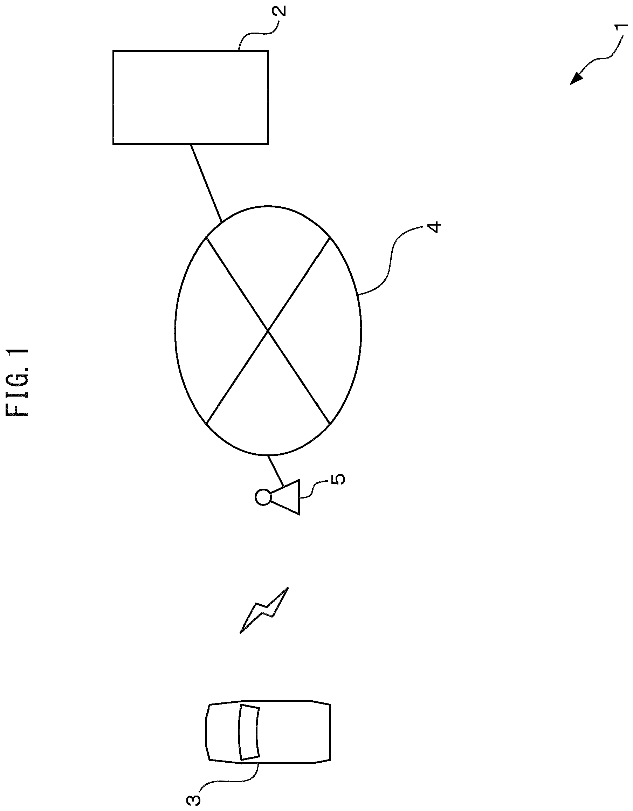

Figure 1 schematically illustrates the configuration of a system for collecting data for map generation that includes the data collecting apparatus. In the present embodiment, the system 1 includes a server 2, which is an example of the apparatus for collecting data for map generation, and at least one vehicle 3. The vehicle 3 accesses a wireless base station 5, which is connected, for example, via a gateway (not illustrated) to a communication network 4 connected with the server 2, thereby connecting to the server 2 via the wireless base station 5 and the communication network 4. Although Figure 1 illustrates only one vehicle 3, the system 1 may include multiple vehicles 3. Similarly, the communication network 4 may be connected with multiple wireless base stations 5.

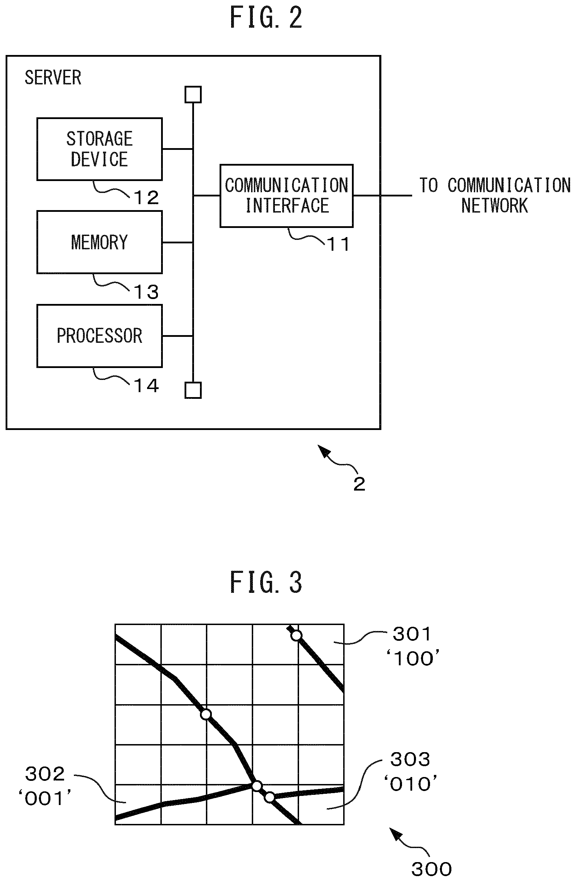

Figure 2 illustrates the hardware configuration of the server 2, which is an example of the apparatus for collecting data for map generation. The server 2 includes a communication interface 11, a storage device 12, a memory 13, and a processor 14. The communication interface 11, the storage device 12, and the memory 13 are connected to the processor 14 via a signal line. The server 2 may further include an input device, such as a keyboard and a mouse, and a display device, such as a liquid crystal display.

The communication interface 11, which is an example of the communication unit, includes an interface circuit for connecting the server 2 to the communication network 4. The communication interface 11 is configured so that it can communicate with the vehicle 3 via the communication network 4 and the wireless base station 5. More specifically, the communication interface 11 transmits a notification signal including the type information received from the processor 14 and other signals to the vehicle 3 via the communication network 4 and the wireless base station 5. The communication interface 11 also passes, to the processor 14, data received from the vehicle 3, such as vehicle location information of the vehicle 3, collection target data, and location information, via the wireless base station 5 and the communication network 4.

The storage device 12, which is an example of a storing unit, includes, for example, a hard disk drive, or an optical recording medium and an access device therefor. For each of the road sections included in the target region for generating or updating a map, the storage device 12 stores the type information, which designates the type of collection target data for the road section and indicates whether the data is being collected, the collection target data of the type designated for the road section, the number of counts of the collection target data, and the target number of pieces of collection target data, which is referred to as the "target data number" below. The storage device 12 may further store identification information of the vehicle 3 and a planned travel route of the vehicle 3. The storage device 12 may further store a computer program executed on the processor 14 for performing a process for collecting data for map generation, which is referred to as a "data collecting process" below. The storage device 12 may further store the road map to be updated using the collection target data.

Figure 3 is a diagram for briefly describing the type information. In the present embodiment, the type information 300 indicates the region where the collection target data is collected, and this region is divided into multiple mesh-like divisions. The type of collection target data is designated for each division, i.e., for each of road sections included in the divisions. Examples of the type of collection target data include feature information (an example of the first type) for identifying a feature (e.g., a road marking, such as a road section line, or a signpost) that is represented on the road map and in an image of surroundings of the vehicle 3 obtained by a camera mounted on the vehicle 3, a sub-image (an example of the second type) cut out from the image so as to include a portion representing a road surface, and the image itself (an example of the third type), which may be referred to as the "whole image" below. For example, each division of the type information 300 is associated with a type flag indicating the type of collection target data for the division. For example, assume that the value of the type flag is "001," "010," and "100" for the divisions where the collection target data is a whole image, a sub-image, and feature information, respectively. In this case, for a division 301 of the type information 300, the value of the type flag is "100," and thus the designated type of collection target data is feature information. For a division 302, the value of the type flag is "001," and thus the designated type of collection target data is a whole image. For a division 303, the value of the type flag is "010," and thus the designated type of collection target data is a sub-image.

The types of collection target data are designated, for example, by an operator with an input device (not illustrated) division by division. For example, a whole image is designated as the type of collection target data for a division including a road section of a complex shape, e.g., an intersection of a special shape, such as a five-way intersection. In contrast, feature information is designated as the type of collection target data for a division including no road section of a complex shape such as one described above. A sub-image may be designated as the type of collection target data for a division where information on a particular portion of a road, such as a road surface, is required.

A division may have multiple types of collection target data. For example, a sub-image and feature information may be designated as the types of collection target data for a division. Additionally, the same road may have a different type for each traveling direction. For example, in a division including a road running east and west, a sub-image may be designated for a vehicle 3 traveling east on this road, and feature information may be designated for a vehicle 3 traveling west on this road, as the type of collection target data. Additionally, a division including a road with multiple lanes may have a different type for each lane.

Individual divisions may be the same size or different sizes. For example, a division with sparse roads may be relatively large, and a division with dense roads may be relatively small. Individual divisions are not limited to rectangular, and may be triangular or hexagonal, for example. The region indicated by the type information may include multiple divisions of different sizes. For example, the target region for collecting data for map generation may be divided into relatively large divisions, and each of the large divisions may be divided into relatively small divisions. In this case, the type of collection target data may be set for each of the large divisions or the small divisions. The number of counts of the collection target data may be defined for each small division, for example.

Each division may also be associated with a collection flag indicating whether the data is being collected. More specifically, when the collection flag of a division is a value (e.g., "1") indicating that the data is being collected, the type information indicates that the collection target data of the type designated for the division is being collected. In contrast, when the collection flag of a division is a value (e.g., "0") indicating that the data collection is stopped, the type information indicates that the collection target data is not being collected for the division. The collection flag of each division may be provided for each type of collection target data. Additionally, the type flag may also function as the collection flag. In this case, the type flag may have one bit for each type of collection target data, and each bit may be set to a value indicating whether the data is being collected for the corresponding type.

The memory 13, which is another example of the storing unit, includes, for example, nonvolatile and volatile semiconductor memories. The memory 13 temporarily stores varieties of data generated during execution of the data collecting process, and varieties of data acquired by communication with the vehicle 3.

The processor 14, which is an example of a control unit, includes one or more central processing units (CPUs) and a peripheral circuit thereof. The processor 14 may further include another arithmetic circuit, such as a logical operation unit or a numerical operation unit. The processor 14 performs the data collecting process.

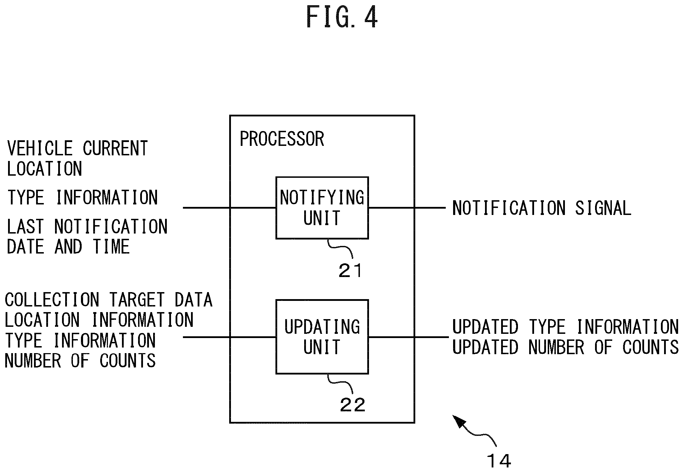

Figure 4 is a functional block diagram of the processor 14, related to the data collecting process. The processor 14 includes a notifying unit 21 and an updating unit 22. These units included in the processor 14 are, for example, functional modules implemented by a computer program executed on the processor 14, or may be dedicated arithmetic circuits provided in the processor 14.

To notify the vehicle 3 of the road section where the data for map generation should be collected and of the type of collection target data, the notifying unit 21 notifies the vehicle 3 of the type information via the communication interface 11, the communication network 4, and the wireless base station 5.

In the present embodiment, when the server 2 receives vehicle location information indicating the current location of the vehicle 3 from the vehicle 3 via the wireless base station 5 and the communication network 4, the notifying unit 21 compares the current location of the vehicle 3 indicated by the vehicle location information with the type information. As will be described below, the vehicle location information is transmitted from the vehicle 3 to the server 2, for example, when the ignition switch of the vehicle 3 is turned on. When the current location of the vehicle 3 is included in a division where the data is being collected (e.g., a division whose collection flag is a value indicating that the data is being collected), the notifying unit 21 determines to notify the vehicle 3 of the type information. The notifying unit 21 may also notify the vehicle 3 of the type information when the current location of the vehicle 3 is included in a division adjacent to the division where the data is being collected. As described above, divisions of different sizes may be set in the type information. In this case, when the current location of the vehicle 3 is included in a large division that includes one or more small divisions where the data is being collected, the notifying unit 21 may determine to notify the vehicle 3 of the type information. When determining to notify the vehicle 3 of the type information, the notifying unit 21 generates a notification signal including the type information and transmits the generated notification signal to the vehicle 3 via the communication interface 11, the communication network 4, and the wireless base station 5.

The type information is supposed not to be frequently changed. However, if the server 2 transmits the type information to the vehicle 3 on every notification of the current location of the vehicle 3, the same type information may be repeatedly notified from the server 2 to the vehicle 3. Thus, the notifying unit 21 may stop retransmitting the type information to the vehicle 3 to which the type information has been transmitted for a predetermined period (e.g., one week to several months) from the last transmission thereof. This will reduce the communication load between the server 2 and the vehicle 3. In this case, every time transmitting a notification signal including the type information, the notifying unit 21 stores, in the storage device 12, the identification information of the destination vehicle 3 and the date and time of transmission of the type information in association with each other. Then, when receiving vehicle location information or route information from the vehicle 3, the notifying unit 21 refers to the identification information of the vehicle 3 included in the vehicle location information or the route information and that date and time of the immediately preceding transmission of the type information which corresponds to the identification information and is stored in the storage device 12, thereby determining whether the predetermined period has elapsed since the date and time of the immediately preceding transmission. Only when the predetermined period has elapsed, the notifying unit 21 may determine to notify the type information again.

The type information notified from the server 2 to the vehicle 3 need not be completely the same as that stored in the server 2. For example, the type information notified from the server 2 to the vehicle 3, which may be referred to as "simplified type information," may include information indicating the type of collection target data and information indicating whether the data is being collected only for the division including the current location or the planned travel route of the vehicle 3 and the divisions therearound (e.g., 8 or 24 neighboring divisions). This reduces the communication load between the server 2 and the vehicle 3.

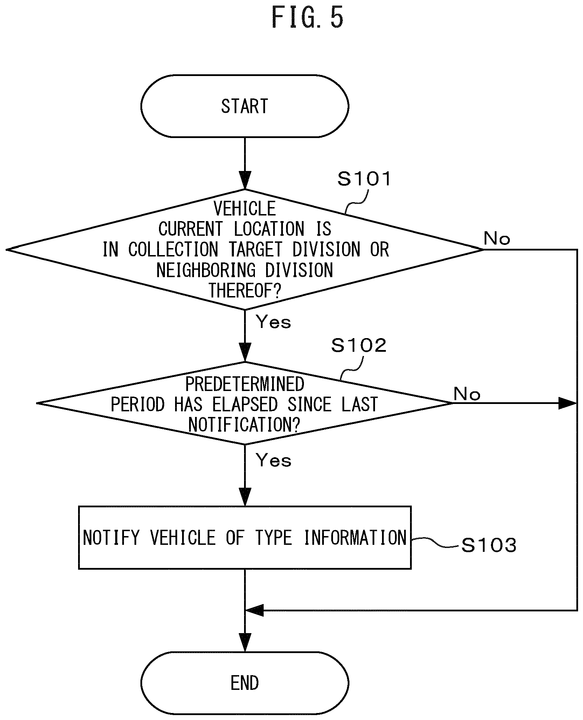

Figure 5 is an operation flowchart of a notification process in the data collecting process. Every time receiving vehicle location information from the vehicle 3, the processor 14 of the server 2 may perform the notification process in accordance with the following operation flowchart.

The notifying unit 21 of the processor 14 determines whether the current location of the vehicle 3 is included in a target division for data collection or in a neighboring division thereof (step S 101). In the case that the current location of the vehicle 3 is included in a target division for data collection or in a neighboring division thereof (Yes in step S101), the notifying unit 21 determines whether a predetermined period has elapsed since the last notification of the type information to the vehicle 3 (step S102). In the case that the predetermined period has elapsed since the last notification of the type information (Yes in step S 102), the notifying unit 21 transmits a notification signal including the type information to the vehicle 3 via the communication interface 11, the communication network 4, and the wireless base station 5 (step S103). The notifying unit 21 then terminates the notification process.

In the case that the current location of the vehicle 3 is not included in the target division for data collection nor in any neighboring division thereof (No in step S101) or that the time elapsed since the last notification of the type information is shorter than the predetermined period (No in step S102), the notifying unit 21 terminates the notification process without notifying the vehicle 3 of the type information. The order of steps S101 and S102 in the process may be changed.

According to a modified example in which the server 2 receives route information including a planned travel route from the vehicle 3, the server 2 may compare the planned travel route with the type information to determine whether to notify the vehicle 3 of the type information. In this case, for example, when the planned travel route passes through a division where the data is being collected, i.e., when the planned travel route at least overlaps a road section included in a division where the data is being collected, the notifying unit 21 determines to notify the vehicle 3 of the type information. In the case that a different type is designated for each traveling direction, only when the planned travel route passes through a division where the data is being collected for the direction that is the same as the traveling direction along the planned travel route, the notifying unit 21 may determine to notify the vehicle 3 of the type information.

The updating unit 22 receives location information indicating the location of a feature represented by collection target data and the collection target data of the type designated for the division including the location indicated by the location information from the vehicle 3 via the wireless base station 5, the communication network 4, and the communication interface 11. Upon this receipt, the updating unit 22 stores, in the storage device 12, the collection target data in association with the division including the location indicated by the location information. The updating unit 22 further increments, by one, the number of counts of the received type of collection target data for the division including the location indicated by the location information. In the case that a target amount of collection target data for this division has been collected, the updating unit 22 further updates the type information so as to stop collection of the collection target data in this division. More specifically, the updating unit 22 rewrites the value of the type flag of the division where collection of the collection target data of a certain type has been completed so as to indicate that this type is no longer a collection target. In the case that the collection flag is defined separately from the type flag, the updating unit 22 also rewrites the value of the collection flag of the division where collection of the collection target data of a certain type has been completed so as to indicate that this type is no longer a collection target.

For example, when the updated number of counts for the division including the location corresponding to the received collection target data reaches a predetermined target data number, the updating unit 22 determines that collection of the data has been completed, i.e., data collection is finished. The target data number may differ between the divisions. Additionally, the target data number may be set type by type for a division where multiple types are collection targets. In this case, the target data number may differ between the types. Then, every time the server 2 receives new collection target data from the vehicle 3, the updating unit 22 compares, for the division including the location corresponding to the collection target data, the updated number of counts of the received type of collection target data with the target data number that is set for the type of the received collection target data. When the counted value reaches the target data number, the updating unit 22 determines that the collection of data of this type has been completed.

A division that has a different type for each traveling direction or lane may have a different target data number for each traveling direction or lane. In this case, the location information transmitted from the vehicle 3 to the server 2 includes information indicating the traveling direction of the vehicle 3 or the lane on which the vehicle 3 is traveling at acquisition of the collection target data. The updating unit 22 then uses the target data number for the traveling direction or the traveling lane of the vehicle 3 indicated by the location information for comparison with the counted value.

Alternatively, for each of the divisions, the updating unit 22 may determine that the collection of data of the division has been completed, when a predetermined period has elapsed since the start of data collection, i.e., since the rewrite of the type flag or the collection flag of the division to a value indicating that a certain type is a target for data collection.

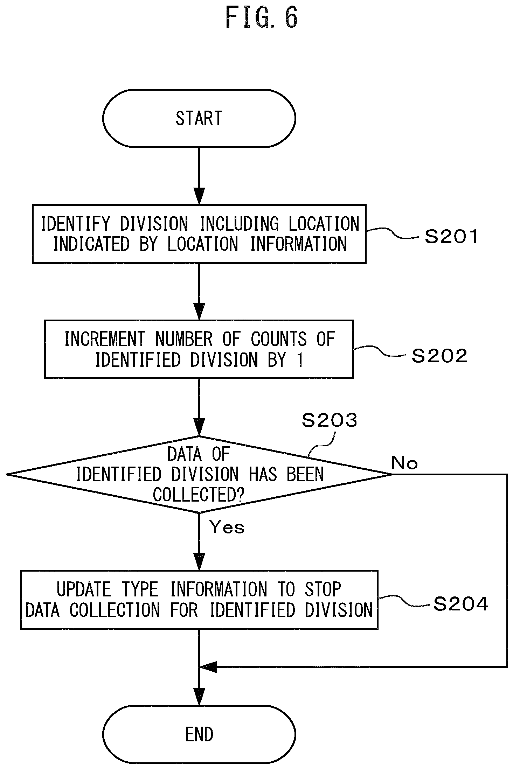

Figure 6 is an operation flowchart of a process for updating the type information, which is referred to as an "update process," in the data collecting process. Every time receiving collection target data from a vehicle 3, the processor 14 of the server 2 may perform the update process in accordance with the following operation flowchart.

The updating unit 22 of the processor 14 identifies the division including the location of a feature indicated by the location information received with the collection target data (step S201). The updating unit 22 then increments, by one, the number of counts of the received type of collection target data for the identified division (step S202). The updating unit 22 also determines whether a target amount of data of the identified division has been collected (step S203). In the case that the target amount of the data has been collected (Yes in step S203), the updating unit 22 updates the type information so as to stop the data collection in the division (step S204). The updating unit 22 then terminates the update process. In the case that data of the identified division is still being collected (No in step S203), the updating unit 22 terminates the update process without updating the type information.

When the type information is updated so as to stop data collection for a division, the notifying unit 21 may notify the updated type information to the vehicle 3 that is assumed to be in this division or a neighboring division thereof via the communication interface 11, the communication network 4, and the wireless base station 5. In this case, the notifying unit 21 may assume that the vehicle 3 having transmitted, to the server 2, location information indicating a location in a division where data collection will be stopped or in a neighboring division thereof, for example, in a predetermined period immediately before the update of the type information, is the vehicle located in the former division or the neighboring division.

According to a modified example, the updating unit 22 may update the type information of a division where data collection is temporarily stopped so as to automatically restart the data collection when a predetermined period has elapsed since the end of the last data collection. Alternatively, the updating unit 22 may update the type information of a division where data collection is stopped so as to restart the data collection at an update time, which is designated by an operator, of the type information for restarting the data collection. In this case, the updating unit 22 may determine the type of collection target data, depending on the time elapsed since the end of the last data collection. This elapsed time is referred to as the "quiescent period" below. For example, a whole image may be designated as the type of collection target data for a division whose quiescent period is longer than a first time threshold. A sub-image may be designated as the type of collection target data for a division whose quiescent period is equal to or shorter than the first time threshold and longer than a second time threshold that is shorter than the first time threshold. Feature information may be designated as the type of collection target data for a division whose quiescent period is equal to or shorter than the second time threshold. In this case, for example, the storage device 12 stores the date and time of the end of data collection for each division. Then, for example, at an operator-designated update time of the type information for restarting the data collection, the updating unit 22 may calculate, for each division, the difference between the update time and the date and time of the end of the last data collection as the quiescent period, and compare the calculated quiescent period with the first and second time thresholds to automatically determine the type of collection target data.

The updating unit 22 may change the type of collection target data, depending on whether a change of information included in the road map (e.g., a road marking, such as a lane division line, a road shape, or a signpost) has been detected since the last data collection. For example, in the case that, for a division where feature information was designated at the last data collection, the location or kind of feature (e.g., a solid lane division line, a dotted lane division line, or a stop line) indicated by the feature information collected after the restart of data collection differs from that of the corresponding feature represented on the road map to be updated or represented by the collection target data collected at the last data collection, the updating unit 22 may change the type of collection target data designated for the division to a sub-image or a whole image. In this case, the updating unit 22 refers to the location information received with the latest collection target data to identify a feature that corresponds to the feature represented by the latest collection target data and is represented on the road map or by the past collection target data collected last time. At this time, the updating unit 22 may identify, as the corresponding feature, a feature on the road map within a predetermined range of the location, which is indicated by the location information, of the feature represented by the latest collection target data. Then, when the predetermined range on the road map includes no feature, the updating unit 22 may determine that the locations of the features differ. The updating unit 22 may also determine whether the kind of feature represented by the latest collection target data differs from that of the corresponding feature represented on the road map or by the past collection target data.

In some cases, for a division where a whole image or a sub-image was designated at the last data collection, the location or kind of a feature detected from a whole image or a sub-image collected after the restart of data collection is the same as that of the corresponding feature represented on the road map to be updated or represented by the collection target data collected last time. In this case, the updating unit 22 may update the type information so as to change the type of collection target data designated for the division to feature information or to stop the data collection. In this case, the updating unit 22 may input the whole image or the sub-image collected after the restart of data collection into a classifier to identify the kind and location of the feature, as will be described below in relation to a data acquiring apparatus of the vehicle 3. Then, the updating unit 22 may compare the kind and location of the identified feature with those of the corresponding feature represented on the road map to be updated or represented by the collection target data collected last time to determine whether the kinds or locations of the features differ.

The following describes the vehicle 3. The system 1 may include multiple vehicles 3 as described above, but the following describes a single vehicle 3 because each vehicle 3 may include the same configuration and perform the same process in relation to the data collecting process.

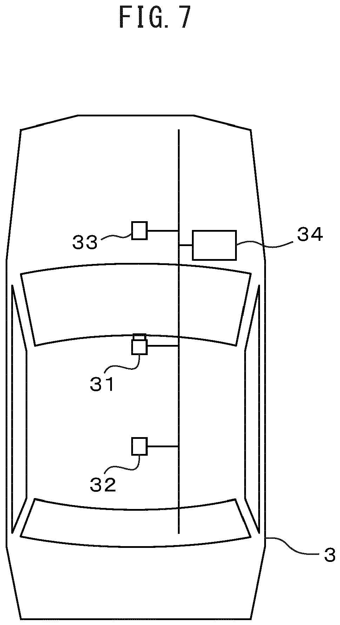

Figure 7 schematically illustrates the configuration of the vehicle 3. The vehicle 3 includes a camera 31 for taking a picture of surroundings of the vehicle 3, a GPS receiver 32, a wireless communication terminal 33, and a data acquiring apparatus 34. The camera 31, the GPS receiver 32, the wireless communication terminal 33, and the data acquiring apparatus 34 are connected so that they can communicate via an in-vehicle network conforming to a standard, such as a controller area network. The vehicle 3 may further include a navigation device (not illustrated) for searching for a planned travel route of the vehicle 3 and for navigating so that the vehicle 3 may travel along the planned travel route.

The camera 31, which is an example of an imaging unit, includes a two-dimensional detector constructed from an array of optoelectronic transducers, such as CCD or C-MOS, having sensitivity to visible light and a focusing optical system focusing an image of a target region on the two-dimensional detector. The camera 31 is attached in such way that it is oriented in the front direction of the vehicle 3, for example, inside a vehicle interior of the vehicle 3. The camera 31 takes a picture of a region in front of the vehicle 3 every predetermined capturing period (e.g., 1/30 to 1/10 seconds), and generates images in which this region is captured. The images obtained by the camera 31 may be color or gray images. The vehicle 3 may include multiple cameras 31 taking pictures in different orientations or having different focal lengths.

Every time generating an image, the camera 31 outputs the generated image to the data acquiring apparatus 34 via the in-vehicle network.

The GPS receiver 32 receives a GPS signal from a GPS satellite every predetermined period, and determines the location of the vehicle 3, based on the received GPS signal. The GPS receiver 32 then outputs positioning information indicating the determination result of the location of the vehicle 3 obtained from the GPS signal to the data acquiring apparatus 34 via the in-vehicle network every predetermined period. The vehicle 3 may include a receiver conforming to another satellite positioning system other than the GPS receiver 32. In this case, the other receiver may determine the location of the vehicle 3.

The wireless communication terminal 33, which is an example of a communication unit, performs a wireless communication process conforming to a predetermined standard of wireless communication, and accesses, for example, the wireless base station 5 to connect to the server 2 via the wireless base station 5 and the communication network 4. The wireless communication terminal 33 receives a downlink radio signal including the type information from the server 2, and outputs the type information to the data acquiring apparatus 34. The wireless communication terminal 33 also generates an uplink radio signal including data received from the data acquiring apparatus 34, such as the vehicle location information indicating the location of the vehicle 3, or collection target data of a designated type and location information indicating the location of a feature represented by the collection target data. The wireless communication terminal 33 then transmits the uplink radio signal to the wireless base station 5 to transmit the vehicle location information, the collection target data, the location information, and other data to the server 2.

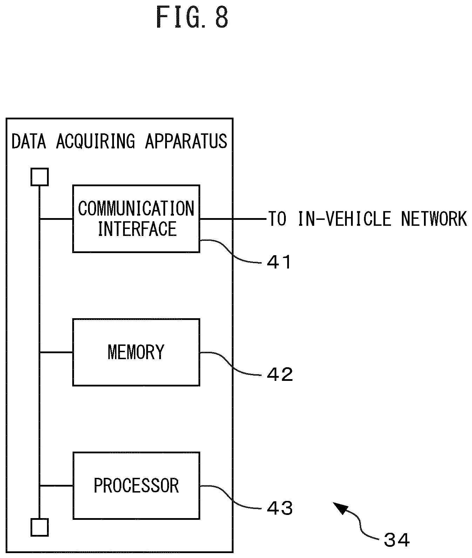

Figure 8 illustrates the hardware configuration of the data acquiring apparatus. The data acquiring apparatus 34 acquires collection target data of the type designated by the type information from an image generated by the camera 31. To this end, the data acquiring apparatus 34 includes a communication interface 41, a memory 42, and a processor 43.

The communication interface 41, which is an example of an in-vehicle communication unit, includes an interface circuit for connecting the data acquiring apparatus 34 to the in-vehicle network. In other words, the communication interface 41 is connected to the camera 31, the GPS receiver 32, and the wireless communication terminal 33 via the in-vehicle network. Every time receiving an image from the camera 31, the communication interface 41 passes the received image to the processor 43. Every time receiving positioning information from the GPS receiver 32, the communication interface 41 passes the received positioning information to the processor 43. Every time receiving information from the server 2, such as a notification signal including the type information, from the wireless communication terminal 33, the communication interface 41 passes the received information to the processor 43. The communication interface 41 further outputs data received from the processor 43, such as the vehicle location information, the collection target data, and the location information, to the wireless communication terminal 33 via the in-vehicle network.

The memory 42, which is an example of a storing unit, includes, for example, volatile and nonvolatile semiconductor memories. The data acquiring apparatus 34 may further include another storing device, such as a hard disk drive. The memory 42 stores varieties of data used in a process related to collection of data for map generation performed by the processor 43 of the data acquiring apparatus 34, such as the identification information of the vehicle 3, internal parameters of the camera 31, the type information received from the server 2, images received from the camera 31, various parameters for specifying a classifier for detecting a feature from an image, and the positioning information received from the GPS receiver 32. The memory 42 may further store computer programs executed on the processor 43 for performing various processes.

The processor 43 includes one or more central processing units (CPUs) and a peripheral circuit thereof. The processor 43 may further include another arithmetic circuit, such as a logical operation unit, a numerical operation unit, or a graphics processing unit. The processor 43 stores, in the memory 42, the images received from the camera 31, the positioning information received from the GPS receiver 32, and the type information received from the server 2 via the wireless communication terminal 33. The processor 43 performs a process related to collection of data for map generation while the vehicle 3 is traveling.

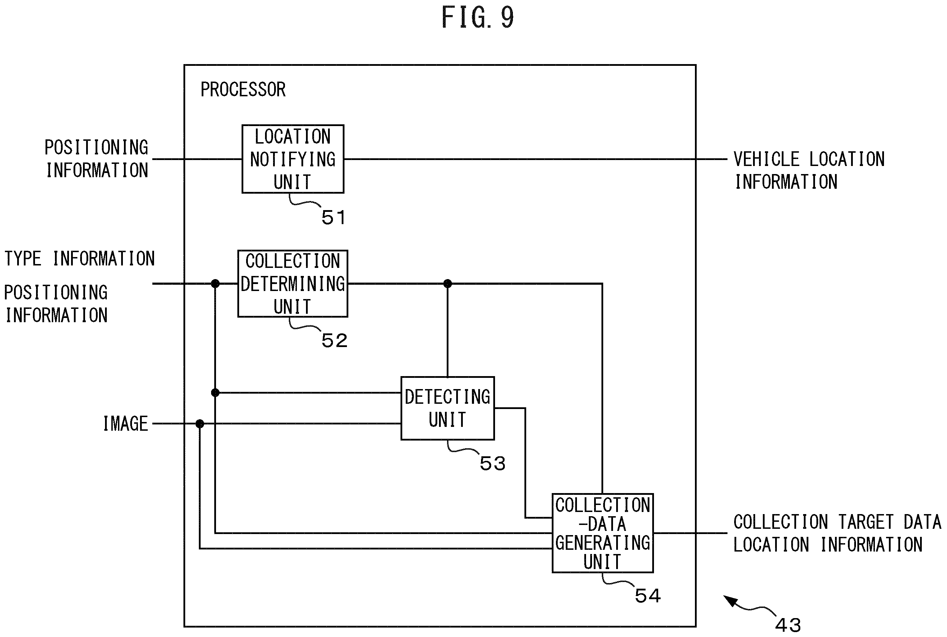

Figure 9 is a functional block diagram of the processor 43 of the data acquiring apparatus 34. The processor 43 includes a location notifying unit 51, a collection determining unit 52, a detecting unit 53, and a collection-data generating unit 54. These units included in the processor 43 are, for example, functional modules implemented by a computer program executed on the processor 43, or may be dedicated arithmetic circuits provided in the processor 43.

The location notifying unit 51 notifies the server 2 of the current location of the vehicle 3 at predetermined timing. For example, when receiving a signal indicating that the ignition switch of the vehicle 3 is turned on via the communication interface 41 from an electronic control unit (not illustrated) controlling the travel of the vehicle 3, the location notifying unit 51 generates vehicle location information including the identification information of the vehicle 3 and the location thereof indicated by the positioning information received from the GPS receiver 32 via the communication interface 41. The location notifying unit 51 then outputs the vehicle location information to the wireless communication terminal 33 via the communication interface 41 to transmit it to the server 2 via the wireless base station 5 and the communication network 4. The location notifying unit 51 may refer to the location of the vehicle 3 and the type information received from the server 2 to determine whether the vehicle 3 has moved to a division adjacent to the previous division. Then, when the vehicle 3 has moved to an adjacent division, the location notifying unit 51 may generate the vehicle location information and transmit the generated vehicle location information to the server 2. When the server 2 determines whether to notify the vehicle 3 of the type information, based on a planned travel route, the location notifying unit 51 generates route information including the identification information of the vehicle 3 and the planned travel route received from the navigation device (not illustrated) of the vehicle 3 via the communication interface 41. The location notifying unit 51 then transmits the generated route information to the server 2, similarly to the transmission of the vehicle location information to the server 2.

The collection determining unit 52 refers to the type information and the location of the vehicle 3 every predetermined period (e.g., 1 second to 1 minute) to determine whether the vehicle location is included in a division for which a certain type of collection target data is designated to be collected. Such a division is referred to as a "designated division" below for the sake of convenience. When the vehicle location is included in a designated division, the collection determining unit 52 determines to collect collection target data of the type designated for this division. When the vehicle location is not included in any designated division, the collection determining unit 52 determines not to collect collection target data of any type. The collection determining unit 52 may determine whether a predetermined point in the area captured by the camera 31 (e.g., the center of the captured area, i.e., that of the image, or the position on the road surface corresponding to the centroid of the region of the image where the road surface is supposed to be represented) is included in a designated division, based on the traveling direction and the location of the vehicle 3, and the orientation and the angle of view of the camera 31. When the predetermined point is included in a designated division, the collection determining unit 52 may determine to collect collection target data of the type designated for this division.

When the type of collection target data for a designated division is designated in the type information for each traveling direction or lane, the collection determining unit 52 identifies the type of data to be collected, based on the traveling direction of the vehicle 3 or the lane on which the vehicle 3 is traveling, and the type information. For example, the collection determining unit 52 can determine the traveling direction of the vehicle 3, based on the amount of change in the locations of the vehicle 3 determined from the most recently obtained pieces of positioning information. The collection determining unit 52 can also compare the image with the road map to identify the traveling lane of the vehicle 3.

When determining to collect collection target data of the type designated for a designated division, the collection determining unit 52 notifies the detecting unit 53 and the collection-data generating unit 54 of the determination result and the designated type.

When it is determined that collection target data will be collected and the type of collection target data designated for a designated division is feature information, the detecting unit 53 detects a predetermined feature from images generated by the camera 31. The predetermined feature is a feature represented on the road map, as described above. The detecting unit 53 then generates location information indicating the kind and location of the feature detected in the images.

For example, the detecting unit 53 inputs an image into a classifier to detect a feature represented in the inputted image. As such a classifier, the detecting unit 53 may use, for example, a deep neural network (DNN) that has been trained to detect, from an inputted image, a feature represented in the image. As such a DNN, the detecting unit 53 may use, for example, a DNN having a convolutional neural network (CNN) architecture, such as a Single Shot MultiBox Detector (SSD) or a Faster R-CNN. In this case, when the detecting unit 53 inputs an image into a classifier, the classifier calculates, for each kind of feature to be detected (e.g., a lane division line, a pedestrian crossing, and a stop line), the probability that the feature is represented in a region of the inputted image. The classifier calculates this probability for each of various regions of the inputted image, and determines that the region where the probability for a certain kind of feature is greater than a predetermined detection threshold represents this kind of feature. The classifier then outputs information indicating the region including the feature to be detected in the inputted image, e.g., a circumscribed rectangle of the feature, which is referred to as an "object region" below, and information indicating the kind of feature represented in the object region.

Alternatively, the detecting unit 53 may use a classifier other than the DNN. For example, the detecting unit 53 may use, as the classifier, a support vector machine (SVM) that has been trained to output the probability that the feature to be detected is represented in a window defined on an image, in response to an input of a characteristic quantity, e.g., histograms of oriented gradients (HOG), calculated with respect to the window. The detecting unit 53 calculates the characteristic quantity with respect to a window defined on an image while variously changing the position, size, and aspect ratio of the window, and inputs the calculated quantity to the SVM to obtain the probability for the window. The detecting unit 53 then determines that the window for which the probability is greater than a predetermined detection threshold is an object region representing the feature to be detected.

The detecting unit 53 estimates the location of the feature represented in the object region detected from the image, based on the bearing of the location corresponding to the centroid of the object region with respect to the camera 31, the location and the traveling direction of the vehicle 3, and the internal parameters of the camera 31, such as its orientation and angle of view. The detecting unit 53 then outputs the kind of the detected feature and the estimated location thereof to the collection-data generating unit 54.

The collection-data generating unit 54 generates collection target data of the type designated for a designated division and notified from the collection determining unit 52, and location information indicating the location of the feature represented by the collection target data. The collection-data generating unit 54 then outputs the generated collection target data and location information together with the identification information of the vehicle 3 to the wireless communication terminal 33 via the communication interface 41 to transmit the identification information of the vehicle 3, the collection target data, and the location information to the server 2 via the wireless base station 5 and the communication network 4.

For example, when the designated type is a whole image, the collection-data generating unit 54 uses an image obtained from the camera 31 and representing a road in the designated division as the collection target data. An image obtained by the camera 31 attached so as to take a picture of a region in front of the vehicle 3 is supposed to show a road. When the designated type is a sub-image, the collection-data generating unit 54 cuts out an area that is supposed to show a road surface from an image obtained from the camera 31 and representing a road in the designated division to generate a sub-image, and uses it as the collection target data. Information indicating the area that is supposed to show a road surface in an image may be prestored in the memory 42. The collection-data generating unit 54 may refer to this information to identify the area to be cut out from the image. When the designated type is feature information, the collection-data generating unit 54 uses the feature information received from the detecting unit 53 and including the kind of the detected feature as the collection target data.

The collection-data generating unit 54 incorporates the location of the vehicle 3 where the image used for generating the collection target data was captured into the location information as the location of the feature represented by the collection target data. Alternatively, when the type of collection target data is feature information, the collection-data generating unit 54 may incorporate the estimated location of the detected feature notified from the detecting unit 53 into the location information. Alternatively, when the type of collection target data is a whole image or a sub-image, the collection-data generating unit 54 may estimate the location corresponding to the center of the whole image or the sub-image, based on the bearing of the location corresponding to the image center with respect to the camera 31, the location and the traveling direction of the vehicle 3, and the internal parameters of the camera 31, such as its orientation and angle of view. Then, the collection-data generating unit 54 may incorporate the estimated location into the location information as the location of the feature represented by the collection target data. When the type of collection target data for a designated division is designated in the type information for each traveling direction or lane, the collection-data generating unit 54 may incorporate information indicating the traveling direction of the vehicle 3 or the lane on which the vehicle 3 is traveling into the location information.

As has been described above, since it allows for designating, for each road section, the type of data that seems to be necessary for generating or updating a road map, the data collecting apparatus can collect data that is suitable to be used for generating or updating the road map and prevent the communication load between the vehicle and the apparatus from increasing.

As described above, those skilled in the art may make various modifications according to embodiments within the scope of the present invention, as defined by the appended claims.

## Claims

1. An apparatus (2) for collecting data for map generation, comprising:
a communication unit (11) capable of communicating with a vehicle (3);
a storing unit (12, 13) that stores type information for designating which type of collection target data is to be collected by an imaging unit (31) of the vehicle (3) for each road section of a plurality of road sections, the collection target data representing a feature in the road section, the feature represented on a map to be generated or updated,
a notifying unit (21) that notifies the vehicle (3) of the type information with the communication unit (11), and
an updating unit (22) that updates the type information for each of the road sections, in the case that collection of the collection target data of the type designated for the road section has been completed, so as to stop collection of the collection target data in the road section, wherein the imaging unit (31) is configured to take a picture of surroundings of the vehicle (3) to generate an image representing the surroundings including the feature, and wherein
the type of the collection target data to be collected for each of the road sections, designated by the type information, is at least one of a first type that is information for identifying the feature represented in the image, a second type including a sub-image of the image, and a third type including all of the image, **characterized in that**
the storing unit (12, 13) further stores a date and time of notification of the type information to the vehicle (3), and
the notifying unit (21) notifies the vehicle (3) of the type information again only after a predetermined period has elapsed since the date and time of the last notification of the type information to the vehicle (3).

2. The apparatus according to claim 1, wherein
for each of the road sections, the type information further includes information indicating whether collection of the collection target data is stopped for each of the first type, second type, and third type, and
the notifying unit (21) notifies the vehicle (3) of the type information when a planned travel route of the vehicle (3) received from the vehicle (3) with the communication unit (11) at least overlaps one of the road sections in which collection the collection target data is not stopped for any of the first type, second type and the third type.

3. A method for collecting data for map generation, comprising the steps of:
notifying, with a communication unit (11), a vehicle (3) of type information for designating which type of collection target data is to be collected by an imaging unit (31) of the vehicle (3) for each road section of a plurality of road sections, the collection target data representing a feature in the road section, the feature to be represented on a map to be generated or updated;
updating the type information to be collected for each of the road sections, designated by the type information, in the case that collection of the collection target data of the type designated for the road section has been completed, so as to stop collection of the collection target data in the road section;
wherein the imaging unit (31) is being configured to take a picture of surroundings of the vehicle (3) to generate an image representing the surroundings including the feature, and wherein
the type of the collection target data is at least one of a first type that is information for identifying the feature represented in the image, a second type including a sub-image of the image, and a third type including all of the image; **characterized in that** the method further comprises the steps of:
storing a date and time of notification of the type information to the vehicle (3); and
notifying the vehicle (3) of the type information again only after a predetermined period has elapsed since the date and time of the last notification of the type information to the vehicle (3).

## Patentansprüche

1. Einrichtung (2) zum Sammeln von Daten für die Kartenerzeugung, umfassend:
eine Kommunikationseinheit (11), die zu der Kommunikation mit einem Fahrzeug (3) fähig ist;
eine Speichereinheit (12, 13), die Typinformationen zum Bezeichnen davon speichert, welcher Typ von Sammlungszieldaten durch eine Bildgebungseinheit (31) des Fahrzeugs (3) für jeden Straßenabschnitt einer Mehrzahl von Straßenabschnitten gesammelt werden soll, wobei die Sammlungszieldaten ein Merkmal auf dem Straßenabschnitt darstellen, wobei das auf einer Karte dargestellte Merkmal erzeugt oder aktualisiert werden soll,
eine Benachrichtigungseinheit (21), die das Fahrzeug (3) über die Typinformationen mit der Kommunikationseinheit (11) benachrichtigt, und
eine Aktualisierungseinheit (22), die die Typinformationen für jeden der Straßenabschnitte aktualisiert, für den Fall, dass die Sammlung der Sammlungszieldaten des Typs, der für den Straßenabschnitt bezeichnet wird, abgeschlossen worden ist, um die Sammlung der Sammlungszieldaten auf dem Straßenabschnitt zu stoppen, wobei die Bildgebungseinheit (31) dazu konfiguriert ist, ein Bild der Umgebung des Fahrzeugs (3) aufzunehmen, um ein Bild zu erzeugen, das die Umgebung einschließlich des Merkmals darstellt, und wobei
der Typ der Sammlungszieldaten, die für jeden der Straßenabschnitte gesammelt werden soll, bezeichnet durch die Typinformationen, wenigstens einer eines ersten Typs, der Informationen zum Identifizieren des Merkmals ist, das in dem Bild dargestellt ist, eines zweiten Typs, der ein Teilbild des Bildes beinhaltet, und eines dritten Typs ist, der das gesamte Bild beinhaltet, **dadurch gekennzeichnet, dass**
die Speichereinheit (12, 13) ferner ein Datum und eine Zeit der Benachrichtigung über die Typinformationen an das Fahrzeug (3) speichert, und
die Benachrichtigungseinheit (21) das Fahrzeug (3) über die Typinformationen erst dann erneut benachrichtigt, nachdem ein vorbestimmter Zeitraum seit dem Datum und der Zeit der letzten Benachrichtigung über die Typinformationen an das Fahrzeug (3) verstrichen ist.

2. Einrichtung nach Anspruch 1, wobei
für jeden der Straßenabschnitte die Typinformationen ferner Informationen beinhalten, die anzeigen, ob die Sammlung der Sammlungszieldaten für jeden des ersten Typs, des zweiten Typs und des dritten Typs gestoppt wird, und
die Benachrichtigungseinheit (21) das Fahrzeug (3) mit der Kommunikationseinheit (11) über die Typinformationen benachrichtig, wenn eine geplante Fahrroute des Fahrzeugs (3) von dem Fahrzeug (3) empfangen wird, mit wenigstens einem der Straßenabschnitte überlappt, in dem die Sammlung der Sammlungszieldaten für einen beliebigen des ersten Typs, des zweiten Typs und des dritten Typs nicht gestoppt ist.

3. Verfahren zum Sammeln von Daten für die Kartenerzeugung, umfassend die Schritte von:
Benachrichtigen mit einer Kommunikationseinheit (11) eines Fahrzeugs (3) über Typinformationen zum Bezeichnen davon, welcher Typ von Sammlungszieldaten durch eine Bildgebungseinheit (31) des Fahrzeugs (3) für jeden Straßenabschnitt einer Mehrzahl von Straßenabschnitten gesammelt werden soll, wobei die Sammlungszieldaten ein Merkmal in dem Straßenabschnitt darstellen, wobei das Merkmal auf einer zu erzeugenden oder zu aktualisierenden Karte dargestellt werden soll;
Aktualisieren der zu sammelnden Typinformationen für jeden der Straßenabschnitte, bezeichnet durch die Typinformationen, für den Fall, dass die Sammlung der Sammlungszieldaten des Typs, der für den Straßenabschnitt bezeichnet wird, abgeschlossen worden ist, um die Sammlung der Sammlungszieldaten auf dem Straßenabschnitt zu stoppen; wobei die Bildgebungseinheit (31) dazu konfiguriert ist, ein Bild der Umgebung des Fahrzeugs (3) aufzunehmen, um ein Bild zu erzeugen, das die Umgebung einschließlich des Merkmals darstellt, und wobei
der Typ der Sammlungszieldaten wenigstens einer eines ersten Typs, der Informationen zum Identifizieren des Merkmals ist, das in dem Bild dargestellt ist, eines zweiten Typs, der ein Teilbild des Bildes beinhaltet, und eines dritten Typs ist, der das gesamte Bild beinhaltet, **dadurch gekennzeichnet, dass** das Verfahren ferner die Schritte umfasst von:
Speichern eines Datums und einer Zeit der Benachrichtigung über die Typinformationen an das Fahrzeug (3); und
erneutes Benachrichtigen des Fahrzeugs (3) über die Typinformationen erst dann, nachdem ein vorbestimmter Zeitraum seit dem Datum und der Zeit der letzten Benachrichtigung über die Typinformationen an das Fahrzeug (3) verstrichen ist.

## Revendications

1. Appareil (2) de collecte de données pour la génération de cartes, comprenant :
une unité de communication (11) capable de communiquer avec un véhicule (3) ;
une unité de stockage (12, 13) qui stocke des informations de type pour désigner quel type de données cibles de collecte doivent être collectées par une unité d'imagerie (31) du véhicule (3) pour chaque section de route d'une pluralité de sections de route, la collecte des données cibles représentant une caractéristique dans la section de route, la caractéristique représentée sur une carte devant être générée ou mise à jour,
une unité de notification (21) qui notifie le véhicule (3) des informations de type avec l'unité de communication (11), et
une unité de mise à jour (22) qui met à jour les informations de type pour chacune des sections de route, dans le cas où la collecte des données cibles de collecte du type désigné pour la section de route a été achevée, de manière à arrêter la collecte des données cibles de collecte dans la section de route, dans lequel
l'unité d'imagerie (31) est configurée pour prendre une image de l'environnement du véhicule (3) afin de générer une image représentant l'environnement comprenant la caractéristique, et dans lequel
le type des données cibles de collecte à collecter pour chacune des sections de route, désignées par les informations de type, sont au moins l'un d'un premier type qui est une information permettant d'identifier la caractéristique représentée dans l'image, d'un deuxième type comprenant une sous-image de l'image, et d'un troisième type comprenant toute l'image,
**caractérisé en ce que**
l'unité de stockage (12, 13) stocke en outre une date et une heure de notification des informations de type au véhicule (3), et
l'unité de notification (21) notifie à nouveau au véhicule (3) les informations de type seulement après qu'une période prédéterminée s'est écoulée depuis la date et l'heure de la dernière notification des informations de type au véhicule (3).

2. Appareil selon la revendication 1, dans lequel
pour chacune des sections de route, les informations de type comprennent en outre des informations indiquant si la collecte des données cibles de collecte est arrêtée pour chacun du premier type, du deuxième type et du troisième type, et
l'unité de notification (21) notifie au véhicule (3) les informations de type lorsqu'un itinéraire de déplacement prévu du véhicule (3) reçu depuis le véhicule (3) avec l'unité de communication (11) chevauche au moins l'une des sections de route dans lesquelles la collecte les données cibles de collecte ne sont arrêtées pour aucun des premier type, deuxième type et troisième type.

3. Procédé de collecte de données pour la génération de cartes, comprenant les étapes consistant à :
notifier, avec une unité de communication (11), à un véhicule (3) des informations de type pour désigner quel type de données cibles de collecte doivent être collectées par une unité d'imagerie (31) du véhicule (3) pour chaque section de route d'une pluralité de sections de route, les données cibles de collecte représentant une caractéristique dans la section de route, la caractéristique à représenter sur une carte devant être générée ou mise à jour ;
mettre à jour les informations de type à collecter pour chacune des sections de route, désignées par les informations de type, dans le cas où la collecte des données cibles de collecte du type désigné pour la section de route a été achevée, de manière à arrêter la collecte des données cibles de collecte dans la section de route ;
dans lequel l'unité d'imagerie (31) est configurée pour prendre une image de l'environnement du véhicule (3) afin de générer une image représentant l'environnement comprenant la caractéristique, et dans lequel
le type des données cibles de collecte est au moins l'un d'un premier type qui est une information pour identifier la caractéristique représentée dans l'image, d'un deuxième type comprenant une sous-image de l'image, et d'un troisième type comprenant toute l'image ;
**caractérisé en ce que** le procédé comprend en outre les étapes consistant à :
stocker une date et une heure de notification des informations de type au véhicule (3) ; et
notifier à nouveau au véhicule (3) les informations de type seulement après qu'une période prédéterminée s'est écoulée depuis la date et l'heure de la dernière notification des informations de type au véhicule (3).
